# EUROPÄISCHE PATENTANMELDUNG

(11) **EP 1 304 575 A2**
(43) Veröffentlichungstag der Anmeldung: **23.04.2003**
(21) Anmeldenummer: 02021068.8
(22) Anmeldetag: 21.09.2002
(51) Int. Cl.: G01P 3/44

(54) **Kreisringförmiges Sensorgehäuse**

(30) Priorität: 10.10.2001 DE 10149642
(71) Anmelder: Carl Freudenberg KG, 69469 Weinheim (DE)
(72) Erfinder: Kammerer, Eric, 52200 Langres (FR); Lutaud, Dominique, 52360 Orbigny au Mont (FR)

(57) **Zusammenfassung**

Beschrieben wird ein Sensorgehäuse (3) für eine Welle (1), das feststehend ist sowie mindestens einen Sensor (4) zur Erfassung der Drehbewegung und/oder des Drehwinkels der Welle (1) aufweist. Das Sensorgehäuse (3) weist eine kreisringförmige Gestalt auf und die Welle (1) an ihrem Außenumfang mit Abstand zentrisch umschließt. Die Konstruktion zeichnet sich durch einfache Herstellbarkeit und Montage aus und gestattet eine genaue Justierung des Sensors.

## Beschreibung

Die vorliegende Erfindung betrifft ein kreisringförmiges Sensorgehäuse zur Verfolgung der Bewegung einer drehbaren Welle.

Gehäuse zur Aufnahme von Sensoren, mit denen die Drehung von Wellen verfolgt werden können sind an sich bekannt.

Aus der DE-U-200 00 694 ist ein Dichtflansch zur Abdichtung von sich drehenden Maschinenteilen bekannt. Dieser weist einen Sensor auf, der mittels Federelementen befestigt ist.

In der DE-A-199 22 215 wird eine Vorrichtung beschrieben, mittels der ein Sensor in einem Gehäuse justiert werden kann.

Die EP-A-495,323 beschreibt eine kreisringförmige Befestigung für einen Sensor.

Aus der DE-A-197 40 348 ist ein Wellendichtring mit Sensor bekannt. Dabei ist von Nachteil, dass die Drehwinkelpositionierung nur ungenau möglich ist.

Ausgehend von diesem Stand der Technik lag der vorliegenden Erfindung die Aufgabe zugrunde, ein Sensorgehäuse bereitzustellen, das kostengünstig herzustellen ist, ohne aufwendige Justierarbeiten zu montieren ist, einen geringen Bedarf an Einbauraum aufweist und eine exakte und steife Lagerung des Sensors gewährleistet. Das wiederum führt zu hoher Signalqualität, da das erfindungsgemäße Gehäuse keine Schiefstellung in Bezug auf die Welle gestattet und somit auf einfache Art und Weise die Schiefstellung des Sensors vermieden werden kann.

Das erfindungsgemäße Sensorgehäuse ist robust in seiner Ausführung und weist dadurch eine lange Gebrauchsdauer auf.

Gelöst wird diese Aufgabe durch ein Gehäuse (3) um eine Welle (1), das feststehend ist sowie mindestens einen Sensor (4) zur Erfassung von Bewegungsparametern, wie der Drehzahl und/oder des Drehwinkels und/oder der Laufruhe, der Welle (1) aufweist. Das Gehäuse ist durch kreisringförmige Gestalt gekennzeichnet und umschließt die Welle (1) an ihrem Aussenumfang zentrisch und mit Abstand; d.h., es besteht kein direkter Kontakt zwischen der Welle (1) und der zentrischen Öffnung im Gehäuse (3).

In einer bevorzugten Ausführungsform ist mit der Welle (1) ein Geberrad (7) drehfest verbunden, das zusammen mit Sensor (4) die Erfassung der Drehbewegung und/oder des Drehwinkels des Geberrades und somit der Welle gestattet.

Weitere vorteilhafte Ausgestaltungen der Erfindung sind in den Unteransprüchen dargestellt.

Das erfindungsgemäße Sensorgehäuse wird nachfolgend anhand der Figuren 1 bis 12 näher erläutert. Diese zeigen:
- Fig. 1: einen Längsschnitt durch ein kreisringförmiges Sensorgehäuse
- Fig. 2: eine Ansicht von der Position X des kreisringförmigen Sensorgehäuses der Fig. 1
- Fig. 3: einen Längsschnitt durch ein weiteres kreisringförmiges Sensorgehäuse
- Fig. 4: einen Längsschnitt durch ein weiteres kreisringförmiges Sensorgehäuse
- Fig. 5: einen Längsschnitt durch ein weiteres kreisringförmiges Sensorgehäuse
- Fig. 6: einen Längsschnitt durch ein weiteres kreisringförmiges Sensorgehäuse
- Fig. 7: einen Längsschnitt durch ein weiteres kreisringförmiges Sensorgehäuse
- Fig. 8: einen Längsschnitt durch ein weiteres kreisringförmiges Sensorgehäuse
- Fig. 9: eine Aufsicht auf ein kreisringförmiges Sensorgehäuse
- Fig. 10: eine Aufsicht auf ein weiteres kreisringförmiges Sensorgehäuse
- Fig. 11a/b: Aufsicht sowie Längsschnitt durch ein weiteres kreisringförmiges Sensorgehäuse
- Fig. 12: Längsschnitt durch ein kreisringförmiges Sensorgehäuse in Montageposition

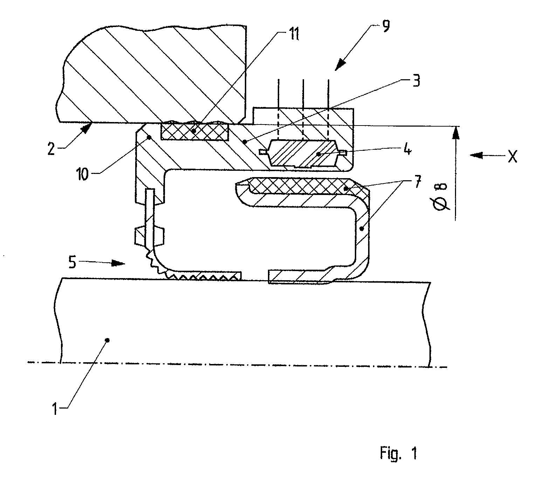

In Fig. 1 ist eine Ausführungsform des erfindungsgemäßen Sensorgehäuses im Längsschnitt dargestellt. Mit Welle (1) ist ein Geberrad (7) drehfest verbunden. Welle (1) wird durch eine zentrische Bohrung des kreisförmigen Sensorgehäuses (3) nach außen geführt. Letzteres weist ein Haftteil (10) eines Wellendichtringes (5) auf, der Welle (1) dynamisch und die aufnehmende Bohrung (2) statisch abdichtet. Haftteil (10) des Wellendichtringes (5) ist vorzugsweise aus Kunststoff ausgeführt, beispielsweise aus einem thermoplastischen oder duroplastischen Material. Haftteil (10) und Sensorgehäuse (3) sind in der dargestellten Ausführungsform einstückig und materialeinheitlich. Sensorgehäuse (3) ist so ausgestaltet, dass sich zwischen Geberrad (7) und Sensorgehäuse ein schmaler Spalt ausbildet. Im Sensorgehäuse (3) befindet sich mindestens ein Sensor (4). Dieser ist mit einer nicht dargestellten Auswertungseinheit verbunden, welche die über das radial wegführende Kabel (9) abgeleiteten Signale zu Informationen über die Drehzahl bzw. den Drehwinkel und/oder die Laufruhe der Welle (1) verarbeitet. Das Sensorgehäuse (3) ist durch Presspassung in der aufnehmenden Bohrung (2) gehalten. Die statische Dichtung (11) dichtet das Sensorgehäuse (3) nach außen ab. In der dargestellten Ausführungsform weist das Sensorgehäuse (3) einen Zentrierdurchmesser (8) auf, der größer ist als der Durchmesser des Geberrades (7). Das Sensorgehäuse (3) zentriert sich in der Bohrung für die Welle (1); der Sensor (4) kann in das Sensorgehäuse (3) eingespannt oder eingegossen sein oder mit anderen Befestigungsmitteln gehalten werden. Geberrad (7) kann eine beliebige Ausgestaltung besitzen, solange Sensor (4) dadurch in die Lage versetzt wird, Informationen über Bewegungsparameter der Welle (1) aufzunehmen. So kann Geberrad (7) beispielsweise entlang seines Umfangs einen einheitlichen Durchmesser besitzen und als Multipolrad, das abwechselnd in Nord- und Südpole magnetisiert ist, ausgestaltet sein oder Geberrad (7) weist entlang seines Umfangs alternierend angeordnete Segmente verschiedenen Durchmessers auf.

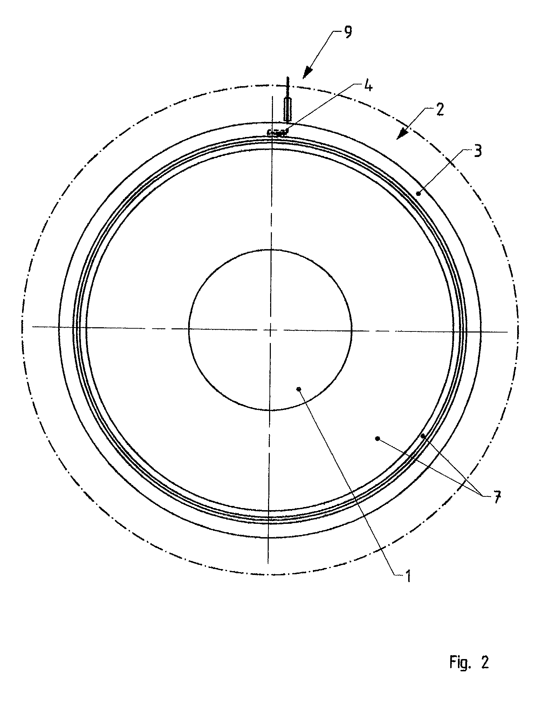

In Fig. 2 ist eine Ansicht von der Position X des kreisringförmigen Sensorgehäuses der Fig. 1 dargestellt. Zu erkennen ist der Querschnitt von Welle (1) und Geberrad (7). Dieses ist vom kreisringförmigen Sensorgehäuse (3) umgeben, in das der Sensor (4) mit den radial wegweisenden Kabeln (9) integriert ist. Vorzugsweise weist das Sensorgehäuse mehrere (nicht dargestellte) Sensoren (4) auf. Ferner ist die Bohrung (2) zu erkennen, durch die die Welle (1) nach außen geführt wird.

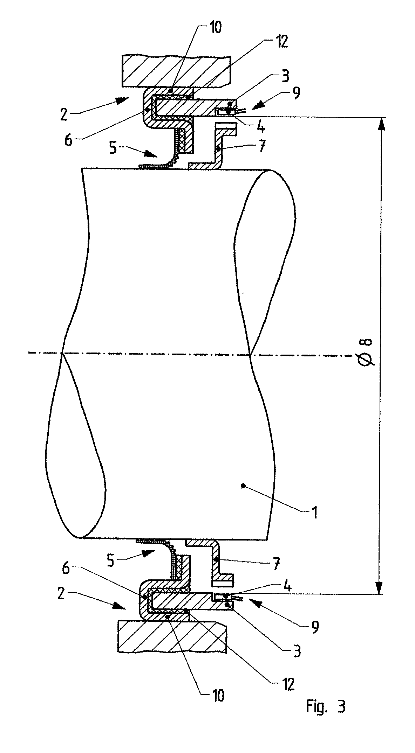

In Fig. 3 ist eine weitere Ausführungsform des erfindungsgemäßen kreisringförmigen Sensorgehäuses im Längsschnitt dargestellt. Mit Welle (1) ist ein Geberrad (7) drehfest verbunden. Welle (1) wird durch eine zentrische Bohrung des kreisförmigen Sensorgehäuses (3) nach außen geführt. Das Haftteil (10) für den Wellendichtring (5) umfasst einen Versteifungsring (6), der vorzugsweise aus Metall besteht, und die aufnehmende Bohrung statisch abdichtet. Das Haftteil (10) ist in dieser Ausführungsform mit dem kreisringförmigen Sensorgehäuse (3) verklebt (12). Haftteil (10) und Wellendichtring (5) sind in der dargestellten Ausführungsform über eine elastomere Zwischenschicht miteinander verbunden. Das Sensorgehäuse (3) ist so ausgestaltet, dass sich zwischen Geberrad (7) und Sensorgehäuse ein schmaler Spalt ausbildet. Im Sensorgehäuse (3) befinden sich mehrere Sensoren (4). Diese sind mit einer nicht dargestellten Auswertungseinheit verbunden, welche die über axial wegführende Kabel (9) abgeleiteten Signale zu Informationen über die Drehzahl bzw. den Drehwinkel der Welle (1) verarbeitet. Das Haftteil (10) ist zusammen mit dem Sensorgehäuse (3) an der Bohrung (2), durch die die Welle (1) aus dem Aggregat austritt, befestigt. In der dargestellten Ausführungsform weist das Sensorgehäuse (3) einen Zentrierdurchmesser (8) auf, der größer ist als der Durchmesser des Geberrades (7). Das Sensorgehäuse (3) zentriert sich in der Bohrung für die Welle (1); die Sensoren (4) können in das Sensorgehäuse (3) eingegossen oder eingespannt sein oder mit anderen Befestigungsmitteln gehalten werden.

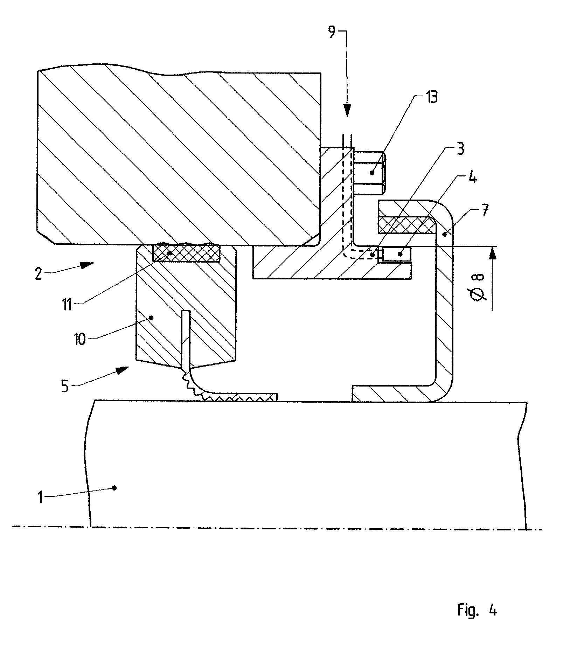

In Fig. 4 ist eine weitere Ausführungsform des erfindungsgemäßen kreisringförmigen Sensorgehäuses im Längsschnitt dargestellt. Mit Welle (1) ist ein Geberrad (7) drehfest verbunden. Welle (1) wird durch eine zentrische Bohrung des kreisförmigen Sensorgehäuses (3) nach außen geführt. Das Haftteil (10) für den Wellendichtring (5) ist in der Bohrung (2) durch Presspassung gehalten. Das Sensorgehäuse (3) ist an die Wandung des Aggregates mit den Schrauben (13) angeschraubt. Haftteil (10) besteht wie das Sensorgehäuse (3) vorzugsweise aus Kunststoff. Die statische Dichtung (11) dichtet das Haftteil (10) nach außen ab. Das Sensorgehäuse (3) ist so ausgestaltet, dass sich zwischen Geberrad (7) und Sensorgehäuse ein schmaler Spalt ausbildet. Im Sensorgehäuse (3) befindet sich mindestens ein Sensor (4), der mit einer nicht dargestellten Auswertungseinheit verbunden ist. Die vom Sensor (4) aufgenommenen Signale werden über radial wegführende Kabel (9) abgeleitet. Die Dichtungen sowie deren Halterungen (5, 10, 11) und die Sensorik (3, 4, 9) sind in dieser Ausführungsform zwei separate Bauteile. In der dargestellten Ausführungsform weist das Sensorgehäuse (3) einen Zentrierdurchmesser (8) auf, der kleiner ist als der Durchmesser des Geberrades (7). Das Sensorgehäuse (3) zentriert sich in der Bohrung für die Welle (1); Sensor (4) kann in das Sensorgehäuse (3) eingegossen oder eingespannt sein oder mit anderen Befestigungsmitteln gehalten werden.

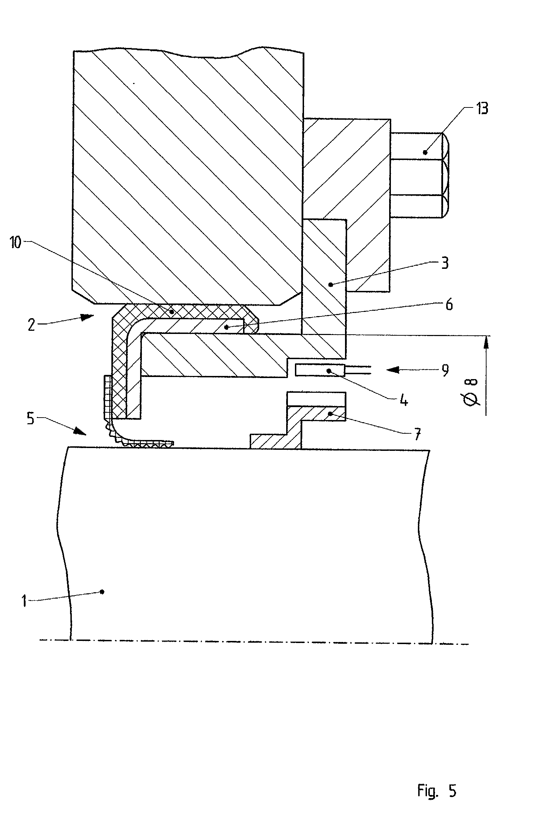

In Fig. 5 ist eine weitere Ausführungsform des erfindungsgemäßen kreisringförmigen Sensorgehäuses im Längsschnitt dargestellt. Mit Welle (1) ist ein Geberrad (7) drehfest verbunden. Welle (1) wird durch eine zentrische Bohrung des kreisförmigen Sensorgehäuses (3) nach außen geführt. Das Haftteil (10) für den Wellendichtring (5) besteht aus Elastomer mit einer zähharten, insbesondere metallischen, Versteifung (6) und ist zwischen Sensorgehäuse (3) und Maschinenteilwandung eingeklemmt. Das Sensorgehäuse (3) ist so ausgestaltet, dass sich zwischen Geberrad (7) und Sensorgehäuse ein schmaler Spalt ausbildet. Im Sensorgehäuse (3) befindet sich mindestens ein Sensor (4), der mit einer nicht dargestellten Auswertungseinheit verbunden ist. Die vom Sensor (4) aufgenommenen Signale werden über axial wegführende Kabel (9) abgeleitet. Das Haftteil (10) ist durch Presspassung in der Bohrung (2) in der Maschine befestigt. In der dargestellten Ausführungsform weist das Sensorgehäuse (3) einen Zentrierdurchmesser (8) auf, der größer ist als der Durchmesser des Geberrades (7). Das Sensorgehäuse (3) zentriert sich in der Bohrung für die Welle (1) im Wellendichtring (5). Sensor (4) kann in das Sensorgehäuse (3) eingebettet sein oder mit anderen Befestigungsmitteln gehaltert werden. Das Sensorgehäuse (3) ist über einen Winkelring und die Schrauben (13) axial gegen Wandern gesichert.

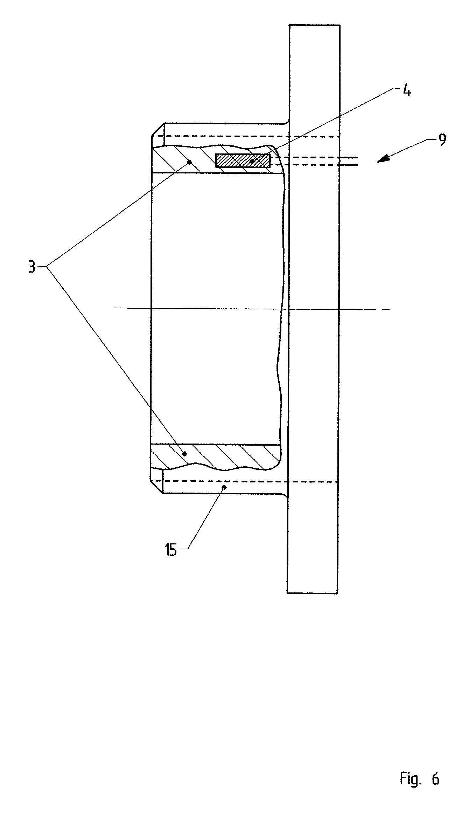

in Fig. 6 ist eine weitere Ausführungsform des erfindungsgemäßen kreisringförmigen Sensorgehäuses im Längsschnitt dargestellt. Welle (1) wird durch eine zentrische Bohrung des kreisförmigen Sensorgehäuses (3) nach außen geführt. Das Sensorgehäuse (3) weist ein Außengewinde (15) auf, und wird in ein Innengewinde einer nicht dargestellten Bohrung eingeschraubt. Das Sensorgehäuse (3) ist so ausgestaltet, dass Welle (1) direkt durch die zentrische Bohrung nach außen geführt wird. In der Nähe der inneren Oberfläche des Sensorgehäuses (3) befindet sich mindestens ein Sensor (4), der mit einer nicht dargestellten Auswertungseinheit verbunden ist. Die vom Sensor (4) aufgenommenen Signale werden über axial wegführende Kabel (9) abgeleitet. In der vorliegenden Ausführungsform ist die Welle (1) selbst mit Vorrichtungen ausgestaltet, beispielsweise mit optischen Markierungsstreifen, die die Erzeugung einer Meßgröße durch den Sensor (4) gestatten. Es ist auch möglich, dass die Welle (1) von einem Elastomerband umgeben ist, wobei das Band abwechselnd auf Nord- und Südpole magnetisiert ist. Das Sensorgehäuse (3) zentriert sich in der Bohrung (2) für die Welle (1). Sensor (4) kann in das Sensorgehäuse (3) eingebettet oder anderweitig befestigt werden.

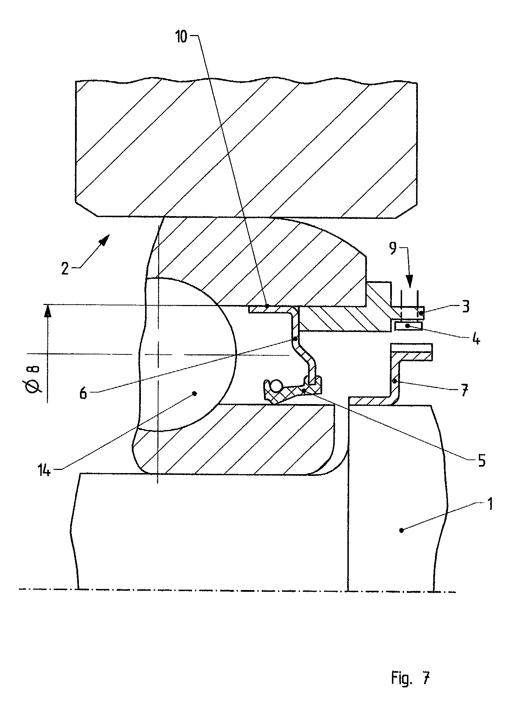

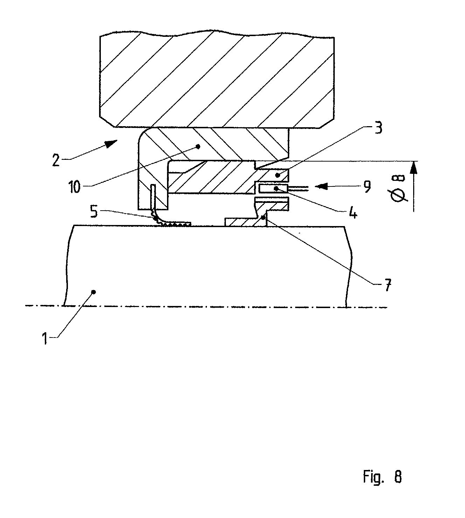

In Fig. 7 ist eine weitere Ausführungsform des erfindungsgemäßen kreisringförmigen Sensorgehäuses im Längsschnitt dargestellt. In den Außenring eines Wälzlagers (14) sind der Wellendichtring (5, 6, 10) und das Sensorgehäuse (3) eingepresst. Das Geberrad bzw. Multipolrad (7) ist verdrehfest auf die Welle (1) aufgepresst. Die Wirkungsweise entspricht den zuvor beschriebenen Ausführungsformen. In Fig. 8 ist eine weitere Ausführungsform des erfindungsgemäßen kreisringförmigen Sensorgehäuses im Längsschnitt dargestellt. Mit Welle (1) ist ein Geberrad (7) drehfest verbunden. Welle (1) wird durch eine zentrische Bohrung des kreisförmigen Sensorgehäuses (3) nach außen geführt. Das Haftteil (10) für den Wellendichtring (5) ist mit dem Sensorgehäuse (3) formschlüssig verbunden (geklipst) und besteht vorzugsweise aus Kunststoff. Das Sensorgehäuse (3) besitzt einen Axialanschlag und ist so ausgestaltet, dass sich zwischen Geberrad (7) und Sensorgehäuse (3) ein schmaler Spalt ausbildet. Im Sensorgehäuse (3) befindet sich mindestens ein Sensor (4), der mit einer nicht dargestellten Auswertungseinheit verbunden ist. Die vom Sensor (4) aufgenommenen Signale werden über axial wegführende Kabel (9) abgeleitet. Das Haftteil (10) ist zusammen mit dem Sensorgehäuse (3) an der Maschine befestigt. Die Bohrung (2) ist die Durchtrittsöffnung für die Welle (1) vom Innern der Maschine nach außen. In der dargestellten Ausführungsform weist das Sensorgehäuse (3) einen Zentrierdurchmesser (8) auf, der größer ist als der Durchmesser des Geberrades (7). Das Sensorgehäuse (3) zentriert sich in der Bohrung für die Welle (1) im Haftteil (10). Sensor (4) kann in das Sensorgehäuse (3) eingebettet sein oder mit anderen Befestigungsmitteln gehaltert werden.

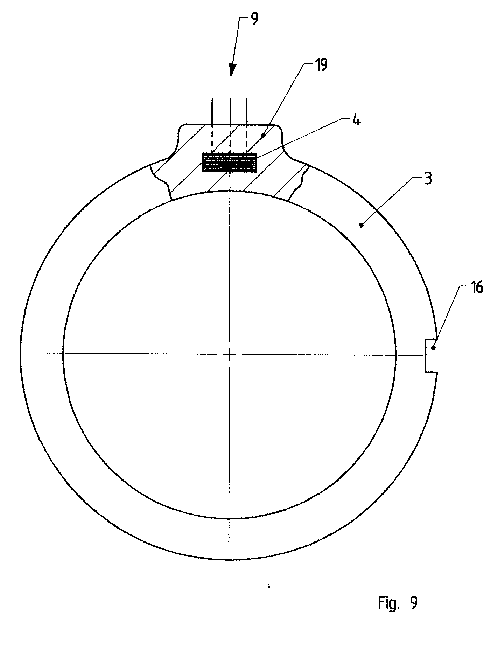

In Fig. 9 ist eine Aufsicht auf das erfindungsgemäße kreisringförmige Sensorgehäuse dargestellt. Das Sensorgehäuse (3) weist in der Nähe seines inneren Durchmessers mindestens einen Sensor (4) auf, der mit einer nicht dargestellten Auswertungseinheit verbunden ist. Sensor (4) und Abführung des Kabels (9) sind in einem nach außen gerichteten Radialvorsprung (19) angeordnet. Ferner weist das Sensorgehäuse (3) eine Nut (16) für eine Passfeder zur Bestimmung der Drehwinkelstellung auf. Die Wirkungsweise der Sensorik entspricht den zuvor beschriebenen Ausführungsformen.

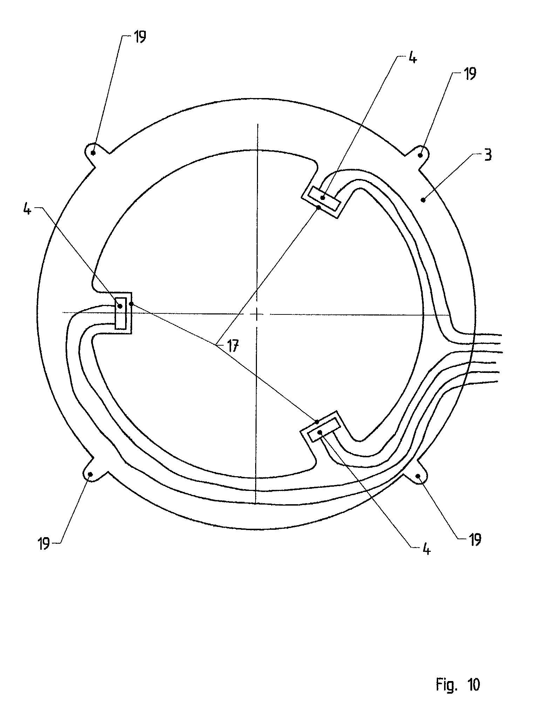

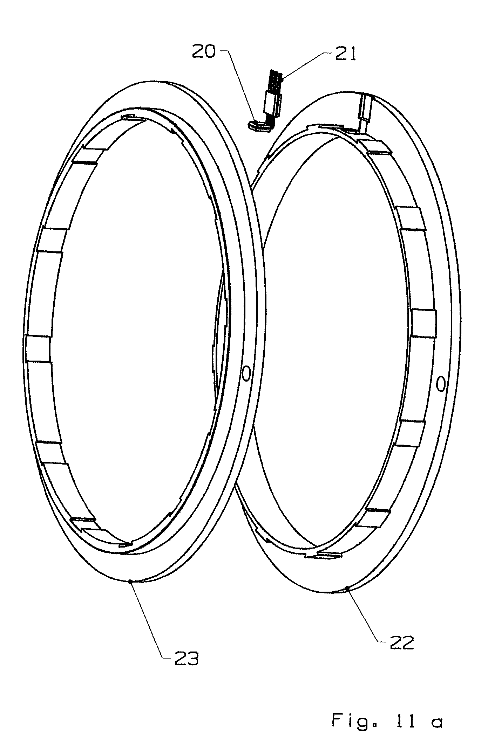

In Fig. 10 ist eine Aufsicht auf ein weiteres erfindungsgemäßes kreisringförmiges Sensorgehäuse dargestellt. Die Abbildung zeigt neben dem Sensorgehäuse (3) drei Sensoren (4), die jeweils an einem nach innen gerichteten Radialvorsprung (17) des Sensorgehäuses (3) angeordnet sind. Mindestens ein Radialvorsprung (19) nach außen bestimmt die Drehwinkelstellung, indem der Radialvorsprung (19) in eine am Maschinengehäuse drehwinkeljustierte Nut eingreift. Die Abführung der Kabel ist radial und nicht an der gleichen Stelle des Umfangs, an der die Sensoren (4) angebracht sind. Die dargestellte Ausführungsform ist besonders bevorzugt, da durch die Anordnung der Sensoren (4) Material eingespart werden kann.

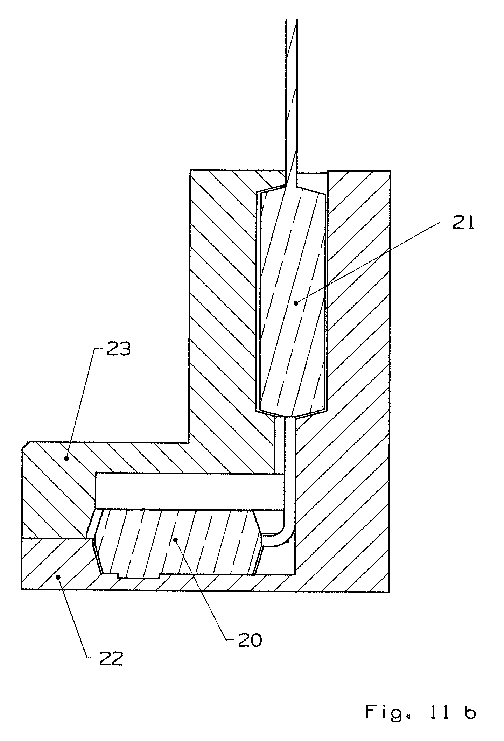

Fig. 11a und 11b zeigen Aufsicht und Schnitt durch ein erfindungsgemäßes kreisringförmiges Sensorgehäuse. Dieses besteht aus einem Außenring (23) und einem Innenring (22). Der Sensor (4) bestehend aus einem Messwertaufnehmer (20) und einem Messwertumformer (21) ist zwischen die beiden Ringe (22, 23) eingelegt. Kabel (9) leitet die erfassten Meßgrößen in radialer Richtung an eine nicht dargestellte Auswerteeinheit weiter. Die Besonderheit dieser Ausführungsform besteht darin, dass Messwertaufnehmer (20) und Messwertumformer (21) in die beiden separat erzeugten Ringe (22, 23) eingelegt sind. Im Lieferzustand können die beiden Ringe (22, 23) aneinander verlierfest verbunden werden. Die nicht dargestellte Welle wird durch die zentrische Bohrung des Innenringes (22) nach außen geführt. In der vorliegenden Ausführungsform ist die Welle (1) selbst mit Vorrichtungen ausgestaltet, beispielsweise mit optischen Markierungsstreifen, die die Erzeugung einer Meßgröße durch den Sensor (4) gestatten. Das Sensorgehäuse (3) zentriert sich in der Bohrung für die Welle.

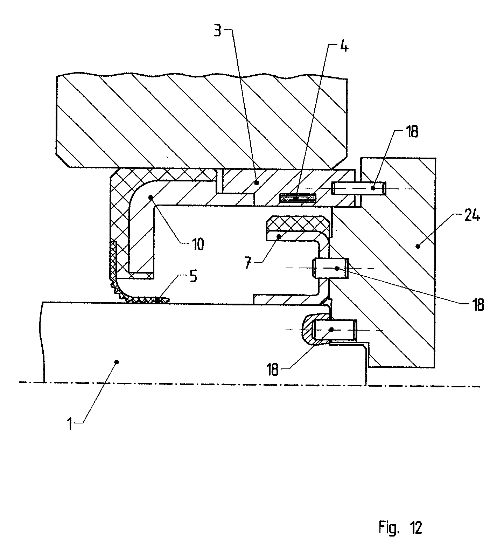

In Fig. 12 wird eine weitere Ausführungsform des erfindungsgemäßen kreisringförmigen Sensorgehäuse im Längsschnitt dargestellt. Gezeigt werden Sensorgehäuse (3), Geberrad (7) und Montagewerkzeug (24). Zur Winkelpositionierung haben Sensorgehäuse (3) und Geberrad (7) je ein Loch, in das ein Zylinderstift (18) des Montagewerkzeugs eingreift. Ein weiterer Zylinderstift (18) greift in die abzudichtende Welle (1) ein. Drehwinkeljustierung von Sensorgehäuse (3) und Geberrad (7) erfolgen über die gleiche Markierung, beispielsweise eine Bohrung, der Welle (1). Dadurch lässt sich eine sehr genaue Positionierung und somit eine gute Signalqualität erzielen. In der dargestellten Ausführungsform werden Wellendichtring (5), Sensorgehäuse (3) mit Haftteil (10) für Wellendichtring (5) und Geberrad (7) gleichzeitig montiert. Die Besonderheit dieser Ausführungsform besteht darin, dass die Drehwinkelpositionierung über das Montagewerkzeug (24) und die Bohrung in der Welle mit Zylinderstift (18) vorgenommen wird.

## Patentansprüche

1. Sensorgehäuse (3) für eine Welle (1) das feststehend ist und mindestens einen Sensor (4) zur Erfassung von Bewegungsparametern der Welle (1) aufweist, **dadurch gekennzeichnet, dass** das Sensorgehäuse (3) eine kreisringförmige Gestalt aufweist und die Welle (1) an ihrem Aussenumfang mit Abstand zentrisch umschließt.

2. Sensorgehäuse nach Anspruch 1, **dadurch gekennzeichnet, dass** mit der Welle (1) ein Geberrad (7) drehfest verbunden ist, das zusammen mit Sensor (4) die Erfassung der Drehbewegung und/oder des Drehwinkels der Welle (1) gestattet.

3. Sensorgehäuse nach Anspruch 2, **dadurch gekennzeichnet, dass** Welle (1) durch eine zentrische Bohrung des kreisringförmigen Sensorgehäuses (3) nach außen geführt wird, das ein Haftteil (10), einen Wellendichtring (5) für die dynamische Abdichtung und eine statische Dichtung (11) für die Bohrung aufweist.

4. Sensorgehäuse nach Anspruch 3, **dadurch gekennzeichnet, dass** Sensorgehäuse (3) und Haftteil (10) aus Kunststoff bestehen, insbesondere einstückig und materialeinheitlich sind.

5. Sensorgehäuse nach Anspruch 3, **dadurch gekennzeichnet, dass** das Sensorgehäuse (3) so ausgestaltet ist, dass sich zwischen Geberrad (7) und Sensorgehäuse (3) ein schmaler Spalt ausbildet, und im Sensorgehäuse (3) sich mindestens ein Sensor (4) befindet.

6. Sensorgehäuse nach Anspruch 3, **dadurch gekennzeichnet, dass** das Sensorgehäuse (3) einen Zentrierdurchmesser (8) aufweist, der größer oder kleiner ist, als der Durchmesser des Geberrades (7).

7. Sensorgehäuse nach Anspruch 2, **dadurch gekennzeichnet, dass** Welle (1) durch eine zentrische Bohrung des kreisförmigen Sensorgehäuses (3) nach außen geführt wird und dass ein kreisringförmiges Haftteil (10) für den Wellendichtring (5) vorgesehen ist, das einen Versteifungsring (6) umfasst, der vorzugsweise aus Metall besteht.

8. Sensorgehäuse nach Anspruch 7, **dadurch gekennzeichnet, dass** Haftteil (10) mit dem kreisringförmigen Sensorgehäuse (3) verklebt ist sowie Haftteil (10) und Wellendichtring (5) über eine polymere Zwischenschicht miteinander verbunden sind.

9. Sensorgehäuse nach Anspruch 2, **dadurch gekennzeichnet, dass** Wellendichtring (5, 6) und kreisringförmiges Sensorgehäuse (3) am Außenring eines Wälzlagers (14) festgelegt sind und dass Geberrad (7) mit dem Innenring des Wälzlagers (14) und/oder der Welle (1) umläuft.

10. Sensorgehäuse nach Anspruch 2, **dadurch gekennzeichnet, dass** Welle (1) durch eine zentrische Bohrung des kreisringförmigen Sensorgehäuses (3) nach außen geführt wird und ein kreisringförmiges Haftteil (10) für den Wellendichtring (5) durch Presspassung in der Bohrung (2), die die Durchtrittsöffnung für die Welle (1) vom Innern der Maschine nach außen darstellt, gehalten wird.

11. Sensorgehäuse nach Anspruch 2, **dadurch gekennzeichnet, dass** Welle (1) durch eine zentrische Bohrung des kreisringförmigen Sensorgehäuses (3) nach außen geführt wird, sowie ein kreisringförmiges Haftteil (10) für den Wellendichtring (5) vorgesehen ist, das aus Polymer sowie einer zähharten Versteifung (6) besteht und das zwischen Sensorgehäuse (3) und Maschinenteilwandung eingeklemmt ist.

12. Sensorgehäuse nach Anspruch 1, **dadurch gekennzeichnet, dass** Welle (1) durch eine zentrische Bohrung des kreisringförmigen Sensorgehäuses (3) geführt wird, das Sensorgehäuse (3) ein Außengewinde (15) aufweist zum Einschrauben in das Innengewinde einer Bohrung, wobei sich in der Nähe der inneren Oberfläche des Sensorgehäuses (3) mindestens ein Sensor (4) befindet und die Welle (1) selbst mit Vorrichtungen versehen ist, die die Erzeugung einer Messgröße durch den Sensor (4) gestatten.

13. Sensorgehäuse nach Anspruch 2, **dadurch gekennzeichnet, dass** Welle (1) durch eine zentrische Bohrung des kreisringförmigen Sensorgehäuses (3) geführt wird, sowie ein kreisringförmiges Haftteil (10) für den Wellendichtring (5) vorgesehen ist, das mit dem Sensorgehäuse (3) formschlüssig verbunden (geklipst) ist und vorzugsweise aus Kunststoff besteht.

14. Sensorgehäuse nach Anspruch 1, **dadurch gekennzeichnet, dass** das Sensorgehäuse (3) in der Nähe seines inneren Durchmessers mindestens einen Sensor (4) aufweist, der zusammen mit der Abführung des Kabels (9) in einem nach außen gerichteten Radialvorsprung (19) angeordnet ist.

15. Sensorgehäuse nach Anspruch 13, **dadurch gekennzeichnet, dass** das Sensorgehäuse (3) eine Nut (16) für eine Passfeder zur Bestimmung der Drehwinkelstellung aufweist.

16. Sensorgehäuse nach Anspruch 1, **dadurch gekennzeichnet, dass** das Sensorgehäuse (3) mehrere Sensoren (4) aufweist, die jeweils an einem nach innen gerichteten Radialvorsprung (17) des Sensorgehäuses (3) angeordnet sind.

17. Sensorgehäuse nach Anspruch 15, **dadurch gekennzeichnet, dass** das Sensorgehäuse (3) mindestens einen Radialvorsprung (19) nach außen aufweist, der die Drehwinkelstellung bestimmt.

18. Sensorgehäuse nach Anspruch 1, **dadurch gekennzeichnet, dass** dieses aus einem Außenring (23) und einem Innenring (22) besteht, dass mindestens ein Sensor (4) bestehend aus einem Messwertaufnehmer (20) und einem Messwertumformer (21) zwischen die beiden separat erzeugten Ringe (22, 23) eingelegt ist und dass die Welle (1) durch die zentrische Bohrung des Innenringes (22) geführt wird.

19. Sensorgehäuse nach Anspruch 2, **dadurch gekennzeichnet, dass** Sensorgehäuse (3) und Geberrad (7) zur Winkelpositionierung je ein Loch aufweisen, in das ein Zylinderstift (18) eines Montagewerkzeugs eingreifen kann.

20. Sensorgehäuse nach Anspruch 18, **dadurch gekennzeichnet, dass** Welle (1) zur Winkelpositionierung ebenfalls ein Loch aufweist, in das ein weiterer Zylinderstift (18) eines Montagewerkzeugs (24) eingreift.
